# EUROPEAN PATENT APPLICATION

(11) **EP 4 648 076 A1**
(43) Date of publication of application: **12.11.2025**
(21) Application number: 24770188.1
(22) Date of filing: 17.01.2024
(51) Int. Cl.: H01G 4/30

(54) **MULTILAYER CERAMIC CAPACITOR**

(30) Priority: 13.03.2023 JP 2023038222
(71) Applicant: Murata Manufacturing Co., Ltd., Nagaokakyo-shi, Kyoto 617-8555 (JP)
(72) Inventor: MIZUNO, Hiroki, Nagaokakyo-shi, Kyoto 617-8555 (JP)
(74) Representative: Zimmermann, Tankred Klaus
(86) International application number: PCT/JP2024/001168
(87) International publication number: WO 2024/190066

(57) **Abstract**

Provided is a multilayer ceramic capacitor in which a crack does not reach an internal electrode layer and fatal defects that may cause dielectric breakdown can be suppressed. This multilayer ceramic capacitor comprises: a multilayer body 12 which comprises a plurality of stacked dielectric layers 14; a first internal electrode layer 16a which is exposed in a first end surface 12e and a second internal electrode layer 16b which is exposed in a second end surface 12f, the internal electrode layers being disposed on the plurality of dielectric layers; and a first external electrode 30a and a second external electrode 30b. The multilayer body 12 has an internal layer part to which a plurality of first internal electrode layers 16a and a second internal electrode layer 16b are opposed. The dielectric layers 14 contain voids, and the voids are segregated in the dielectric layers 14. The dielectric layers 14 include a plurality of void-containing dielectric layers 14a, 14b and 14c which are different from each other in the area occupancy of voids (void fraction) in respective cross-sections of the dielectric layers 14.

## Description

### TECHNICAL FIELD

The present invention relates to a multilayer ceramic capacitor.

### BACKGROUND ART

A conventional multilayer ceramic capacitor includes a capacitor body constituted by a ceramic sintered body composed of a dielectric such as barium titanate, and in the capacitor body, internal electrodes made of a noble metal material such as Ag or an Ag-Pd alloy or a base metal material such as Ni are arranged with a ceramic layer (dielectric layer) interposed therebetween so that the internal electrodes are led out to one end surface and the other end surface in an alternating manner. The internal electrodes having one potential are electrically connected to one external electrode, and the internal electrodes having the other potential are electrically connected to another external electrode (see Patent Document 1).

In the multilayer ceramic capacitor described in Patent Document 1, internal electrodes are composed of a metal material, and the external electrodes are composed of a glass component and a plurality of metal components including a metal that is the same as or can be alloyed with the metal material included in the internal electrodes. The external electrodes are configured to be bonded to a wiring board via a conductive resin adhesive, and an area occupancy percentage (porosity) of the metal components to a cross-sectional area of the external electrode is 60% to 95%. Due to this configuration, the multilayer ceramic capacitor can be mounted on the wiring board at low cost with high reliability without using solder.

### Citation List

### Patent Document

Patent Document 1: Japanese Unexamined Patent Application, Publication No. 2001-237137

### DISCLOSURE OF THE INVENTION

### Problems to be Solved by the Invention

However, in a multilayer ceramic capacitor having a general structure such as that described in Patent Document 1, a plurality of pores are present in the ceramic layers (dielectric layers), and when a voltage is applied to the multilayer ceramic capacitor, a crack forms from the pore as a starting point. In the case where a plurality of pores are present, a crack that has formed in the ceramic layer may propagate through the pores to reach the internal electrode layer, and the crack in the internal electrode layer may cause insulation degradation.

To address the above-described disadvantage, it is a main object of the present invention to provide a multilayer ceramic capacitor in which a crack is prevented from reaching an internal electrode layer and which is capable of reducing the likelihood of a fatal defect that may cause dielectric breakdown.

### Means for Solving the Problems

A multilayer ceramic capacitor according to the present invention includes: a multilayer body including a plurality of dielectric layers that are laminated, and having a first main surface and a second main surface opposed to each other in a height direction that is a lamination direction of the plurality of dielectric layers, a first side surface and a second side surface opposed to each other in a width direction orthogonal to the height direction, and a first end surface and a second end surface opposed to each other in a length direction orthogonal to the height direction and the width direction; a first internal electrode layer disposed on the plurality of dielectric layers and exposed on the first end surface; a second internal electrode layer disposed on the plurality of dielectric layers and exposed on the second end surface; a first external electrode disposed on the first end surface; and a second external electrode disposed on the second end surface. In the multilayer ceramic capacitor, the multilayer body has an inner layer portion in which a plurality of the internal electrode layers face each other, the dielectric layers contain pores, the pores are unevenly distributed in each of the dielectric layers, and each of the dielectric layers includes a plurality of pore-containing dielectric layers having different pore area occupancy percentages (porosities) in a cross section of the dielectric layer.

When a voltage is applied to the multilayer ceramic capacitor, a crack forms from a pore as a starting point. In a case where a plurality of pores are present in the dielectric layer, the crack that has formed may propagate through the pores to reach the internal electrode layer, and the crack in the internal electrode layer may cause insulation degradation. At the interface between different dielectric layers, a crack is preferentially formed when a voltage is applied. Therefore, according to the multilayer ceramic capacitor of the present invention in which the dielectric layers contain pores, the pores are unevenly distributed in each of the dielectric layers, and each of the dielectric layers includes a plurality of pore-containing dielectric layers having different pore area occupancy percentages (porosities) in a cross section of the dielectric layer, a crack can be intentionally and preferentially formed at an interface between the plurality of pore-containing dielectric layers having different pore area occupancy percentages (porosities), and the crack is confined in the dielectric layer and is prevented from reaching the internal electrode layer, whereby the likelihood of a fatal defect that may cause dielectric breakdown can be reduced.

### Effects of the Invention

The present invention can provide a multilayer ceramic capacitor in which a crack is prevented from reaching an internal electrode layer and which is capable of reducing the likelihood of a fatal defect that may cause dielectric breakdown.

The aforementioned object of the present invention, other objects thereof, features thereof, and advantages thereof will become clearer from the description of embodiments of the invention provided below with reference to the drawings.

### BRIEF DESCRIPTION OF THE DRAWINGS

FIG. 1 is an external perspective view illustrating an example of a multilayer ceramic capacitor according to an embodiment of the present invention;
FIG. 2 is a front view illustrating the example of the multilayer ceramic capacitor according to the embodiment of the present invention;
FIG. 3 is a cross-sectional view taken along line III-III in FIG. 1;
FIG. 4 is a cross-sectional view taken along line IV-IV in FIG. 1;
FIG. 5 is a schematic cross-sectional view of a multilayer body of the multilayer ceramic capacitor according to the embodiment of the present invention;
FIG. 6(a) is a scanning electron microscope photograph of a portion of a cross section of a dielectric layer of a multilayer ceramic capacitor according to an embodiment of the present invention, and FIG. 6(b) schematically shows the photograph of FIG. 6(a) in a color-coded manner; and

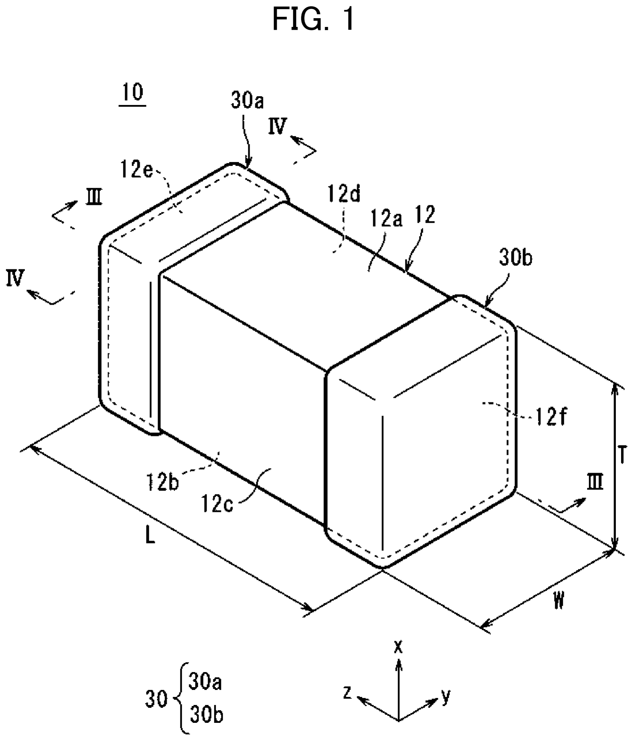

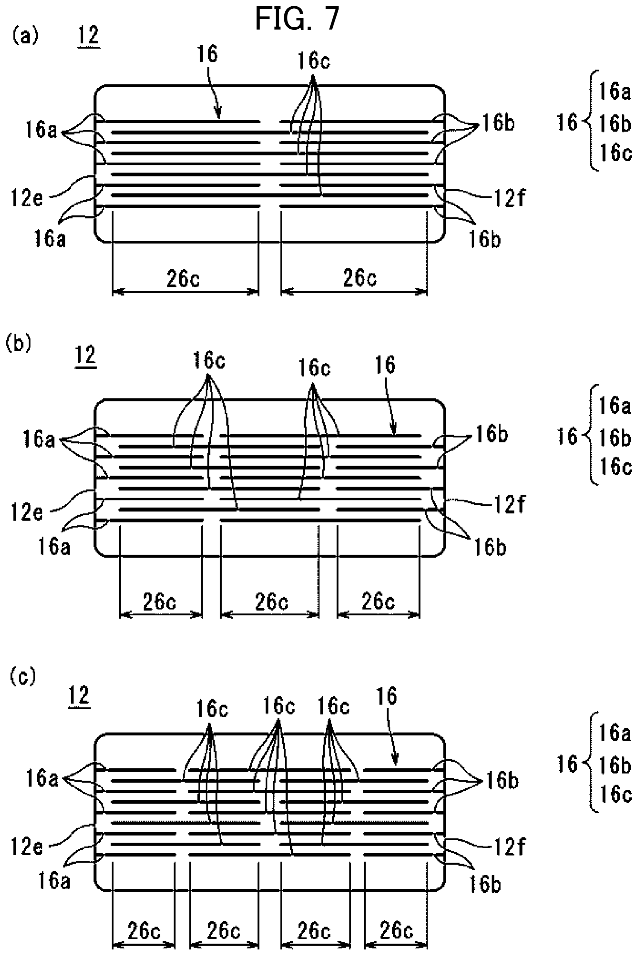

FIG. 7(a) is a cross-sectional view taken along line III-III in FIG. 1 and illustrates a structure in which a counter electrode portion of an internal electrode layer of a multilayer ceramic capacitor according to an embodiment of the present invention is divided into two, FIG. 7(b) is a cross-sectional view taken along line III-III in FIG. 1 and illustrates a structure in which a counter electrode portion of an internal electrode layer of a multilayer ceramic capacitor according to the present invention is divided into three, and FIG. 7(c) is a cross-sectional view taken along line III-III in FIG. 1 and illustrates a structure in which a counter electrode portion of an internal electrode layer of a multilayer ceramic capacitor according to the present invention is divided into four.

### PREFERRED MODE FOR CARRYING OUT THE INVENTION

### 1. Multilayer Ceramic Capacitor

A multilayer ceramic capacitor according to an embodiment of the present invention will be described below.

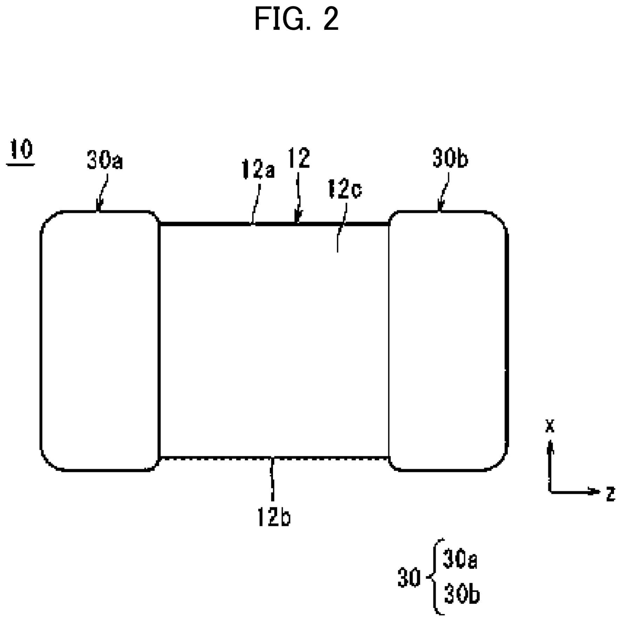

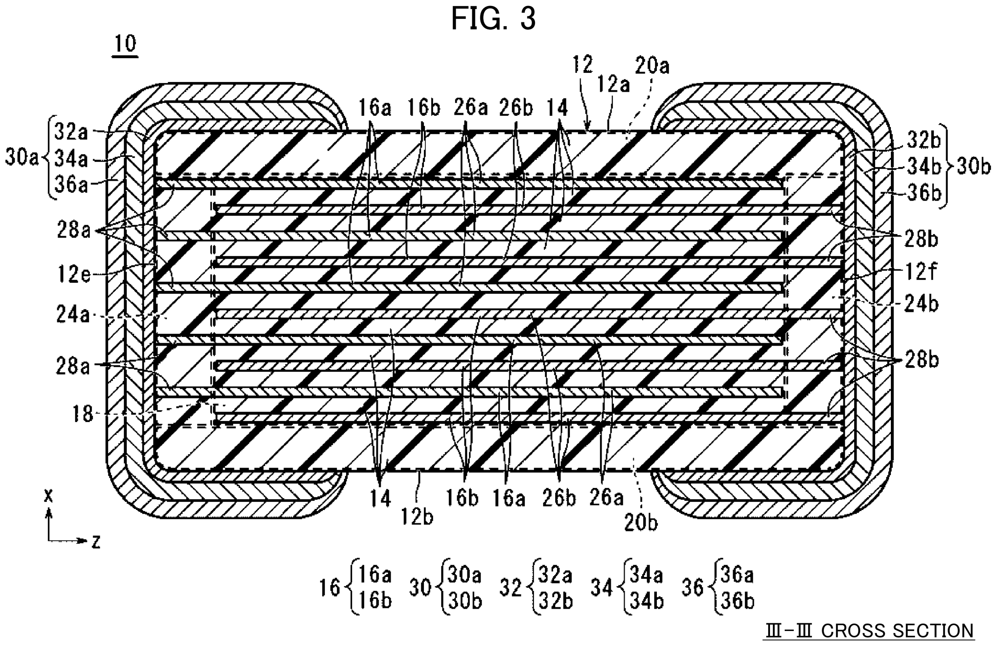

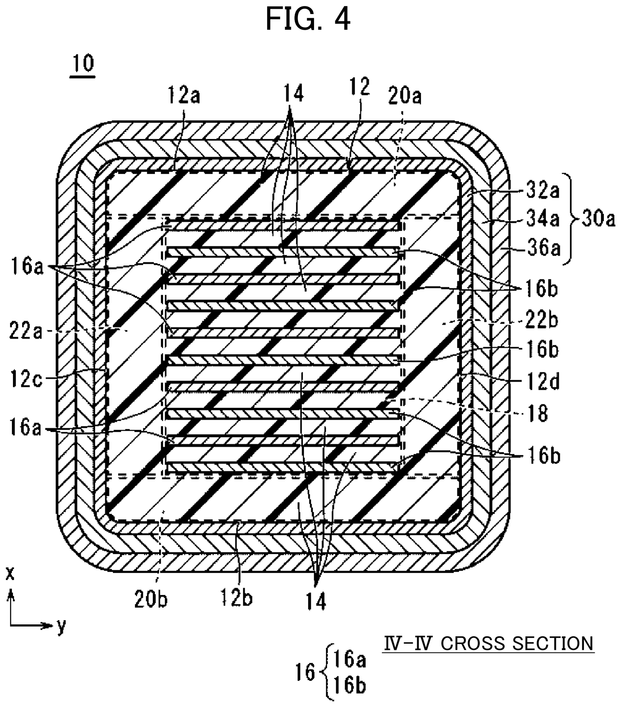

FIG. 1 is an external perspective view illustrating an example of the multilayer ceramic capacitor according to the embodiment of the present invention. FIG. 2 is a front view illustrating the example of the multilayer ceramic capacitor according to the embodiment of the present invention. FIG. 3 is a cross-sectional view taken along line III-III in FIG. 1. FIG. 4 is a cross-sectional view taken along line IV-IV in FIG. 1.

As illustrated in FIGS. 1 to 4, the multilayer ceramic capacitor 10 includes a multilayer body 12 having a rectangular parallelepiped shape, and external electrodes 30 arranged on opposite ends of the multilayer body 12.

The multilayer body 12 includes a plurality of laminated dielectric layers 14 and a plurality of internal electrode layers 16 laminated on the dielectric layers 14. The multilayer body 12 has a first main surface 12a and a second main surface 12b opposed to each other in a height direction x, a first side surface 12c and a second side surface 12d opposed to each other in a width direction y orthogonal to the height direction x, and a first end surface 12e and a second end surface 12f opposed to each other in a length direction z orthogonal to the height direction x and the width direction y. The multilayer body 12 has rounded corners and rounded ridges.

Here, the corner is where three adjacent surfaces of the multilayer body 12 meet each other, and the ridge is where two adjacent surfaces of the multilayer body 12 meet each other. The "rectangular parallelepiped shape" refers to a general member having a first main surface 12a, a second main surface 12b, a first side surface 12c, a second side surface 12d, a first end surface 12e, and a second end surface 12f. The first main surface 12a, the second main surface 12b, the first side surface 12c, the second side surface 12d, the first end surface 12e, and the second end surface 12f may have projections and depressions or the like formed in a portion or the entirety thereof. The dielectric layers 14 and the internal electrode layers 16 are laminated in the height direction x.

The multilayer body 12 includes an inner layer portion 18 constituted by a single or a plurality of the dielectric layers 14 and a plurality of the internal electrode layers 16 disposed on the dielectric layer or layers 14. The internal electrode layers 16 include a first internal electrode layer 16a led out to the first end surface 12e and a second internal electrode layer 16b led out to the second end surface 12f. In the inner layer portion 18, a plurality of the first internal electrode layers 16a and a plurality of the second internal electrode layers 16b face each other with the dielectric layer 14 interposed therebetween.

The multilayer body 12 includes a first main surface-side outer layer portion 20a, which is adjacent to the first main surface 12a and is constituted by the dielectric layers 14 sandwiched between the first main surface 12a and an outermost surface of the inner layer portion 18 facing the first main surface 12a and between the first main surface 12a and an extension line of the outermost surface of the inner layer portion 18.

Likewise, the multilayer body 12 includes a second main surface-side outer layer portion 20b, which is adjacent to the second main surface 12b and is constituted by the dielectric layers 14 sandwiched between the second main surface 12b and an outermost surface of the inner layer portion 18 facing the second main surface 12b and between the second main surface 12b and an extension line of the outermost surface of the inner layer portion 18.

The multilayer body 12 includes a first side surface-side outer layer portion 22a, which is adjacent to the first side surface 12c and is constituted by the dielectric layers 14 sandwiched between the first side surface 12c and an outermost surface of the inner layer portion 18 facing the first side surface 12c.

Likewise, the multilayer body 12 includes a second side surface-side outer layer portion 22b, which is adjacent to the second side surface 12d and is constituted by the dielectric layers 14 sandwiched between the second side surface 12d and an outermost surface of the inner layer portion 18 facing the second side surface 12d.

The multilayer body 12 includes a first end surface-side outer layer portion 24a, which is adjacent to the first end surface 12e and is constituted by the dielectric layers 14 sandwiched between the first end surface 12e and an outermost surface of the inner layer portion 18 facing the first end surface 12e.

Likewise, the multilayer body 12 includes a second end surface-side outer layer portion 24b, which is adjacent to the second end surface 12f and is constituted by the dielectric layers 14 sandwiched between the second end surface 12f and an outermost surface of the inner layer portion 18 facing the second end surface 12f.

The first main surface-side outer layer portion 20a adjacent to the first main surface 12a of the multilayer body 12 is an aggregate of the dielectric layers 14 sandwiched between the first main surface 12a and the internal electrode layer 16 closest to the first main surface 12a.

The second main surface-side outer layer portion 20b adjacent to the second main surface 12b of the multilayer body 12 is an aggregate of the dielectric layers 14 sandwiched between the second main surface 12b and the internal electrode layer 16 closest to the second main surface 12b.

Although the multilayer body 12 is not limited to any particular dimensions, it preferably has a dimension of 0.2 mm or greater and 6.0 mm or less in the length direction z, a dimension of 0.1 mm or greater and 5.0 mm or less in the width direction y, and a dimension of 0.1 mm or greater and 5.0 mm or less in the height direction x.

The dielectric layers 14 can be made of, for example, a dielectric material. As such a dielectric material, a dielectric ceramic containing BaTiO₃, CaTiO₃, SrTiO₃, CaZrO₃, or the like as a main component can be used, for example. In the case where the foregoing dielectric material is included as the main component, a subcomponent such as a Mn compound, a Fe compound, a Cr compound, a Co compound, and a Ni compound, may be added at lower amount than the main component, in accordance with the desired characteristics of the multilayer body 12.

Preferably, each dielectric layer 14 after being subjected to firing has a thickness of, for example, 0.5 µm or greater and 10 µm or less. The number of laminated dielectric layers 14 is preferably 2 or greater and 1000 or less. It should be noted that the number of dielectric layers 14 is the total number of the number of dielectric layers 14 in the inner layer portion 18 and the number of dielectric layers 14 in the first main surface-side outer layer portion 20a and the second main surface-side outer layer portion 20b.

In the multilayer body 12, each of the plurality of dielectric layers 14 contains pores. The pores are unevenly distributed in each of the plurality of dielectric layers 14, and each dielectric layer 14 includes a plurality of pore-containing dielectric layers having different pore area occupancy percentages (porosities) in a cross section of the dielectric layer 14.

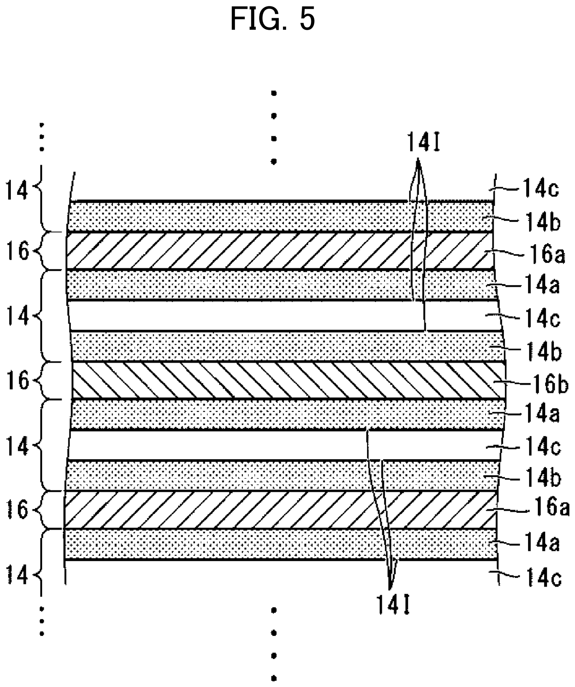

As illustrated in the schematic cross-sectional view of FIG. 5, each of the dielectric layers 14 is composed of the plurality of pore-containing dielectric layers including a first pore-containing dielectric layer 14a, a second pore-containing dielectric layer 14b, and a third pore-containing dielectric layer 14c. It is preferable that the first pore-containing dielectric layer 14a and the second pore-containing dielectric layer 14b have the same pore area occupancy percentage (porosity) that is different from the pore area occupancy percentage (porosity) of the third pore-containing dielectric layer 14c. It is also preferable that the third pore-containing dielectric layer 14c is sandwiched between the first pore-containing dielectric layer 14a and the second pore-containing dielectric layer 14b in the height direction x.

In the above-described configuration, the first pore-containing dielectric layer 14a and the second pore-containing dielectric layer 14b have a lower pore area occupancy percentage (porosity) than the third pore-containing dielectric layer 14c, and thus have high insulating performance as a dielectric. On the other hand, since the pore area occupancy percentage (porosity) of the third pore-containing dielectric layer 14c is different from that of the first pore-containing dielectric layer 14a and the second pore-containing dielectric layer 14b, by applying a voltage to an interface 14I between the third pore-containing dielectric layer and the first pore-containing dielectric layer 14a and an interface 14I between the third pore-containing dielectric layer and the second pore-containing dielectric layer 14b, cracks can be preferentially formed at the interfaces 14I between the pore-containing dielectric layers having different pore area occupancy percentages (porosities).

Thus, the presence of the first pore-containing dielectric layer 14a and the second pore-containing dielectric layer 14b, which have a relatively lower pore area occupancy percentage (porosity) and high insulating performance as a dielectric, makes it possible to ensure the high-temperature load reliability of the multilayer ceramic capacitor 10, while the presence of the third pore-containing dielectric layer 14c makes it possible to preferentially form cracks at the interfaces 14I between the pore-containing dielectric layers having different pore area occupancy percentage (porosities). As a result, the cracks can be prevented from reaching the internal electrode layers 16, and the likelihood of a fatal defect that may cause dielectric breakdown can be reduced.

The porosity of the first pore-containing dielectric layer 14a and the second pore-containing dielectric layer 14b is preferably less than 0.1%, and the porosity of the third pore-containing dielectric layer 14c is preferably 0.1% or more and less than 5.5%.

Due to the above-described configuration, it is possible to achieve not only an effect of reducing a cracking percentage by the presence of the third pore-containing dielectric layer 14c, but also an effect of ensuring the reliability of the multilayer ceramic capacitor 10 by the first pore-containing dielectric layer 14a and the second pore-containing dielectric layer 14b. In a case where the porosity of the third pore-containing dielectric layer 14c is 5.5% or more, the increase in porosity allows an electric field to concentrate to a portion of the dielectric layer 14, particularly, to the third pore-containing dielectric layer 14c, whereby dielectric breakdown is likely to occur in the dielectric layer 14.

In a case where the porosity of the first pore-containing dielectric layer 14a and the second pore-containing dielectric layer 14b is less than 0.1% and the porosity of the third pore-containing dielectric layer 14c is less than 0.1%, there is no substantial difference in porosity between the third pore-containing dielectric layer 14c and each of the first pore-containing dielectric layer 14a and the second pore-containing dielectric layer 14b. As a result, it becomes impossible to preferentially form cracks at the interface 14I between the third pore-containing dielectric layer 14c and the first pore-containing dielectric layer 14a and the interface 14I between the third pore-containing dielectric layer 14c and the second pore-containing dielectric layer 14b by applying a voltage, so that cracks cannot be prevented from reaching the internal electrode layers, and the likelihood of a fatal defect that may cause dielectric breakdown cannot be reduced.

The porosities of the dielectric layers 14 in the multilayer body 12 of the multilayer ceramic capacitor 10 can be measured by the following measurement method.

First, a cross section of the multilayer ceramic capacitor 10 is exposed. Specifically, the cross section in a WT or LT plane of the multilayer ceramic capacitor is polished until the dimension in the length or width direction decreases to 1/2. Next, while observing the cross section with a scanning electron microscope (SEM), a portion where a grain exists and a portion where a cavity in a depth direction is clearly seen are color-coded in the SEM image. Here, a portion with a bright color is defined as a grain G, and a portion with a dark color is defined as a pore P. The area ratio between the grains G and the pores P is calculated as a pore ratio, and the calculated numerical value is defined as the porosity.

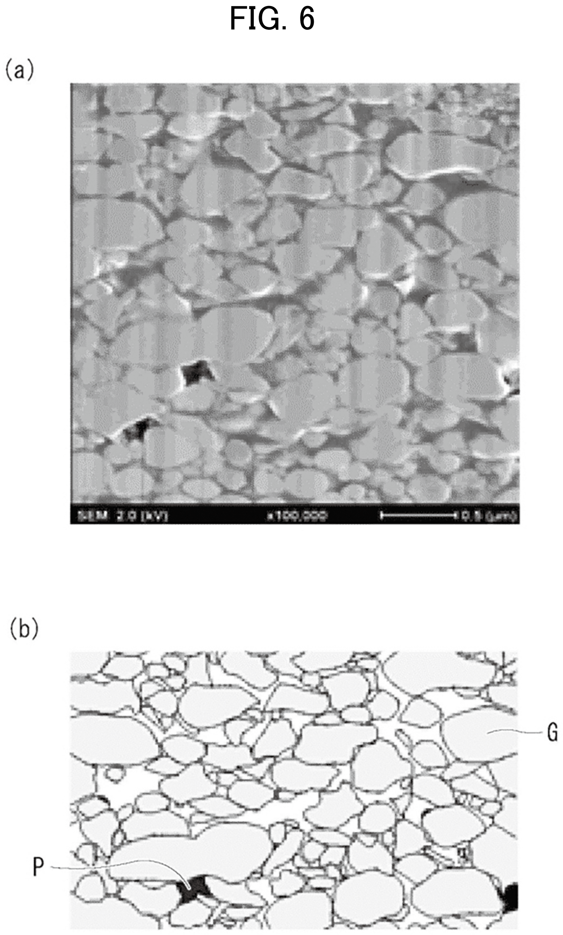

Here, FIG. 6(a) is a cross-sectional SEM image (magnification of 100,000 times) of the third pore-containing dielectric layer 14c, and FIG. 6(b) is a schematic view in which the grains G are extracted by color coding from the cross-sectional SEM image of FIG. 6(a). In FIG. 6(b), the grains G of BT particles are shown in gray, and the pores P are shown in black. The percentage (particle ratio) of the area of the grains G to the entire cross section is 85.53%, and the pore percentage (porosity) is 0.82%. The porosity of the first pore-containing dielectric layer 14a and that of the second pore-containing dielectric layer 14b are also measured in the same manner as described above.

The multilayer body 12 includes, as the plurality of internal electrode layers 16, the plurality of first internal electrode layers 16a and the plurality of second internal electrode layers 16b each having a substantially rectangular shape, for example. The plurality of first internal electrode layers 16a and the plurality of second internal electrode layers 16b are embedded so as to be arranged at equal intervals and alternate with each other with the dielectric layer 14 interposed therebetween in the height direction x of the multilayer body 12. Each of the plurality of first internal electrode layers 16a and the plurality of second internal electrode layers 16b is substantially parallel to the first main surface 12a and the second main surface 12b.

The first internal electrode layers 16a are arranged on the plurality of dielectric layers 14 and are disposed inside the multilayer body 12. Each first internal electrode layer 16a includes a first counter electrode portion 26a that faces the second internal electrode layers 16b, and a first lead-out electrode portion 28a that is disposed in one end portion of the first internal electrode layer 16a and extends from the first counter electrode portion 26a to the first end surface 12e of the multilayer body 12. The first lead-out electrode portion 28a has an end led out to the surface of the first end surface 12e and exposed from the multilayer body 12. In other words, the end of the first lead-out electrode portion 28a is not exposed on the first main surface 12a, the second main surface 12b, the second end surface 12f, the first side surface 12c, or the second side surface 12d. In more detail, each first internal electrode layer 16a has an end located slightly inwardly with respect to the second end surface 12f.

Although the first counter electrode portion 26a of each first internal electrode layer 16a may have any shape without particular limitation, it preferably has a rectangular shape in plan view. Nevertheless, the first counter electrode portion 26a may have a shape with rounded corner portions in plan view or a shape with oblique corner portions (tapered shape) in plan view. Alternatively, it may have a tapered shape that is inclined as approaching either side in plan view.

Although the first lead-out electrode portion 28a of each first internal electrode layer 16a may have any shape without particular limitation, it preferably has a rectangular shape in plan view. Nevertheless, the first lead-out electrode portion 28a may have a shape with rounded corner portions in plan view or a shape with oblique corner portions (tapered shape) in plan view. Alternatively, it may have a tapered shape that is inclined as approaching toward either side in plan view.

The first counter electrode portion 26a and the first lead-out electrode portion 28a of each first internal electrode layer 16a may have the same width, or one of them may be smaller in width than the other.

The second internal electrode layers 16b are arranged on the plurality of dielectric layers 14 and are disposed inside the multilayer body 12. Each second internal electrode layer 16b includes a second counter electrode portion 26b that faces the first internal electrode layers 16a, and a second lead-out electrode portion 28b that is disposed in one end portion of the second internal electrode layer 16b and extends from the second counter electrode portion 26b to the second end surface 12f of the multilayer body 12. The second lead-out electrode portion 28b has an end led out to the surface of the second end surface 12f and exposed from the multilayer body 12. In other words, the end of the second lead-out electrode portion 28b is not exposed on the first main surface 12a, the second main surface 12b, the first end surface 12e, the first side surface 12c, or the second side surface 12d. In more detail, each second internal electrode layer 16b has an end located slightly inwardly with respect to the first end surface 12e.

Although the second counter electrode portion 26b of each second internal electrode layer 16b may have any shape without particular limitation, it preferably has a rectangular shape in plan view. Nevertheless, the second counter electrode portion 26b may have a shape with rounded corner portions in plan view or a shape with oblique corner portions (tapered shape) in plan view. Alternatively, it may have a tapered shape that is inclined as approaching either side in plan view.

Although the second lead-out electrode portion 28b of each second internal electrode layer 16b may have any shape without particular limitation, it preferably has a rectangular shape in plan view. Nevertheless, the second lead-out electrode portion 28b may have a shape with rounded corner portions in plan view or a shape with oblique corner portions (tapered shape) in plan view. Alternatively, it may have a tapered shape that is inclined as approaching toward either side in plan view.

The second counter electrode portion 26b and the second lead-out electrode portion 28b of each second internal electrode layer 16b may have the same width, or one of them may be smaller in width than the other.

The first internal electrode layers 16a and the second internal electrode layers 16b can be constituted by, for example, an appropriate conductive material, examples of which include metals such as Ni, Cu, Ag, Pd, and Au, and an alloy containing at least one of these metals such as an Ag-Pd alloy.

The internal electrode layers 16, i.e., each first internal electrode layer 16a and each second internal electrode layer 16b, preferably have a thickness of 0.2 µm or greater and 2.0 µm or less.

In a case where base electrode layers 32 of the external electrodes 30 described later include a conductive resin layer, the metal constituting the internal electrode layers 16 forms a compound with the metal constituting a conductive filler contained in the conductive resin layer.

The total number of the first internal electrode layers 16a and the second internal electrode layers 16b is preferably 2 or more and 1000 or less.

The multilayer body 12 in FIG. 1 may have a structure in which floating internal electrode layers 16c that are not led out to either the first end surface 12e or the second end surface 12f are arranged in addition to the first internal electrode layers 16a and the second internal electrode layers 16b, and in which a counter electrode portion 26c is divided into two or more segments due to the floating internal electrode layers 16c, as illustrated in FIG. 7A to 7C. For example, the multilayer body may have a two-segment structure illustrated in FIG. 7(a), a three-segment structure illustrated in FIG. 7(b), or a four-segment structure illustrated in FIG. 7(c), and it goes without saying that it may have a four or more-segment structure. By adopting the structure in which the counter electrode portion 26c is divided into two or more segments, a plurality of capacitor components are formed between the first internal electrode layers 16a, the second internal electrode layers 16b, and the floating internal electrode layers 16c that face each other, and these capacitor components are connected in series. As a result, a low voltage is applied to each of the capacitor components, thereby allowing the multilayer ceramic capacitor 10 to have a high breakdown voltage.

Similarly to the first internal electrode layers 16a and the second internal electrode layers 16b, the floating internal electrode layers 16c can be constituted by, for example, an appropriate conductive material, examples of which include metals such as Ni, Cu, Ag, Pd and Au, and an alloy containing at least one of these metals such as an Ag-Pd alloy.

As illustrated in FIGS. 1 to 4, the external electrodes 30 are disposed on and around the first end surface 12e and the second end surface 12f of the multilayer body 12.

Each external electrode 30 includes a base electrode layer 32 containing a metal component and glass, and a lower plating layer 34 disposed on a surface of the base electrode layer 32. Each external electrode 30 preferably includes an upper plating layer 36 disposed on a surface of the lower plating layer 34.

The external electrodes 30 include a first external electrode 30a and a second external electrode 30b.

The first external electrode 30a is connected to the first internal electrode layers 16a and is disposed on at least the surface of the first end surface 12e. The first external electrode 30a extends from the first end surface 12e of the multilayer body 12 to be also disposed on a portion of the first main surface 12a, a portion of the second main surface 12b, a portion of the first side surface 12c, and a portion of the second side surface 12d. In this case, the first external electrode 30a is electrically connected to the first lead-out electrode portions 28a of the first internal electrode layers 16a.

The second external electrode 30b is connected to the second internal electrode layers 16b and is disposed on at least the surface of the second end surface 12f. The second external electrode 30b extends from the second end surface 12f of the multilayer body 12 to be also disposed on a portion of the first main surface 12a, a portion of the second main surface 12b, a portion of the first side surface 12c, and a portion of the second side surface 12d. In this case, the second external electrode 30b is electrically connected to the second lead-out electrode portions 28b of the second internal electrode layers 16b.

In the multilayer body 12, the first counter electrode portions 26a of the first internal electrode layers 16a and the second counter electrode portions 26b of the second internal electrode layers 16b face each other with the dielectric layers 14 interposed therebetween, thereby producing capacitance. As a result, capacitance can be obtained between the first external electrode 30a to which the first internal electrode layers 16a are connected and the second external electrode 30b to which the second internal electrode layers 16b are connected, whereby the characteristics of the capacitor are developed.

The base electrode layer 32 includes a first base electrode layer 32a and a second base electrode layer 32b.

The first base electrode layer 32a is connected to the first internal electrode layers 16a and is disposed on the surface of the first end surface 12e. The first base electrode layer 32a extends from the first end surface 12e to be also disposed on a portion of the first main surface 12a, a portion of the second main surface 12b, a portion of the first side surface 12c, and a portion of the second side surface 12d. In this case, the first base electrode layer 32a is electrically connected to the first lead-out electrode portions 28a of the first internal electrode layers 16a.

The second base electrode layer 32b is connected to the second internal electrode layers 16b and is disposed on the surface of the second end surface 12f. The second base electrode layer 32b extends from the second end surface 12f to be also disposed on a portion of the first main surface 12a, a portion of the second main surface 12b, a portion of the first side surface 12c, and a portion of the second side surface 12d. In this case, the second base electrode layer 32b is electrically connected to the second lead-out electrode portions 28b of the second internal electrode layers 16b.

The base electrode layer 32 includes at least one selected from a baked layer, a conductive resin layer, a thin film layer, or the like.

The following describes a case where the base electrode layer 32 is the above-mentioned baked layer, a case where the base electrode layer 32 is the above-mentioned conductive resin layer, and a case where the base electrode layer 32 is the above-mentioned thin film layer.

### (In the Case of Baked Layer)

The baked layer includes a metal component and glass. The metal component of the baked layer includes, for example, at least one selected from Cu, Ni, Ag, Pd, an Ag-Pd alloy, Au, or the like. The baked layer is formed by baking a conductive paste containing glass and the metal and applied to the multilayer body. The baked layer is formed by way of firing a multilayer chip including the internal electrode layers 16 and the dielectric layers 14 concurrently with the conductive paste applied to the multilayer chip. However, the baked layer may be formed by way of baking after the firing of the multilayer chip including the internal electrode layers 16 and the dielectric layers 14. The baked layer may include a plurality of layers.

Preferably, the first base electrode layer 32a on the first end surface 12e has, in its central portion in the height direction x, a thickness of, for example, about 10 µm or greater and 150 µm or less in the length direction z connecting the first end surface 12e and the second end surface 12f.

Preferably, the second base electrode layer 32b on the second end surface 12f has, in its central portion in the height direction x, a thickness of, for example, about 10 µm or greater and 150 µm or less in the length direction z connecting the first end surface 12e and the second end surface 12f.

Preferably, the first base electrode layer 32a on a portion of the first main surface 12a and a portion of the second main surface 12b has, in its central portion in the length direction z connecting the first end surface 12e and the second end surface 12f, a thickness of, for example, about 10 µm or greater and 100 µm or less in the height direction x connecting the first main surface 12a and the second main surface 12b.

Preferably, the second base electrode layer 32b on a portion of the first main surface 12a and a portion of the second main surface 12b has, in its central portion in the length direction z connecting the first end surface 12e and the second end surface 12f, a thickness of, for example, about 10 µm or greater and 100 µm or less in the height direction x connecting the first main surface 12a and the second main surface 12b.

Preferably, the first base electrode layer 32a on a portion of the first side surface 12c and a portion of the second side surface 12d has, in its central portion in the length direction z connecting the first end surface 12e and the second end surface 12f, a thickness of, for example, about 10 µm or greater and 100 µm or less in the width direction y connecting the first side surface 12c and the second side surface 12d.

Preferably, the second base electrode layer 32b on a portion of the first side surface 12c and a portion of the second side surface 12d has, in its central portion in the length direction z connecting the first end surface 12e and the second end surface 12f, a thickness of, for example, about 10 µm or greater and 100 µm or less in the width direction y connecting the first side surface 12c and the second side surface 12d.

### (In the Case of Conductive Resin Layer)

The conductive resin layer includes a first conductive resin layer and a second conductive resin layer.

Preferably, the first conductive resin layer is provided as the first base electrode layer 32a and covers another layer such as a baked layer. Preferably, the second conductive resin layer is provided as the second base electrode layer 32b and covers another layer such as a baked layer.

Specifically, it is preferable that the first conductive resin layer as the first base electrode layer 32a and the second conductive resin layer as the second base electrode layer 32b are respectively disposed on the other layers such as the baked layers respectively formed on the first end surface 12e and the second end surface 12f, and further extend over portions of the other layers such as the baked layers disposed on the first main surface 12a, the second main surface 12b, the first side surface 12c, and the second side surface 12d. Nevertheless, the first conductive resin layer and the second conductive resin layer may be disposed only on the other layers such as the baked layers on the first end surface 12e and the second end surface 12f.

Each of the first conductive resin layer and the second conductive resin layer preferably has a thickness of, for example, about 10 µm or greater and 200 µm or less.

Each of the first conductive resin layer and the second conductive resin layer contains a thermosetting resin and a metal component.

Due to including the thermosetting resin, the first conductive resin layer and the second conductive resin layer are more flexible than the base electrode layer 32 that is constituted by, for example, a plated film or a fired product of a conductive paste. For this reason, the conductive resin layers function as buffer layers, making it possible to prevent cracks from forming in the multilayer ceramic capacitor 10 even when a physical impact or an impact due to a thermal cycle is applied to the multilayer ceramic capacitor 10.

Specific examples of the thermosetting resin include various known thermosetting resins such as an epoxy resin, a phenol resin, a urethane resin, a silicone resin, a polyimide resin, and the like. Among them, the epoxy resin excellent in heat resistance, moisture resistance, adhesion, etc. is one of the most suitable resins.

The first conductive resin layer and the second conductive resin layer preferably contain a curing agent together with the thermosetting resin. In a case of using an epoxy resin as the base resin, various known compounds such as a phenol-based compound, an amine-based compound, an acid anhydride-based compound, an imidazole-based compound, and the like can be used as the curing agent for the epoxy resin.

As the metal contained in the first conductive resin layer and the second conductive resin layer, Ag, Cu, or an alloy thereof can be used. Alternatively, a metal powder having a surface coated with Ag can be used. Preferably, an Ag-coated Cu or Ni powder is used as the metal powder.

Alternatively, Cu subjected to an antioxidant treatment can be used. The reason for using the Ag-coated metal is that an inexpensive metal can be employed as the base material while characteristics of Ag are maintained.

The first conductive resin layer and the second conductive resin layer preferably contain the metal in an amount of 35 vol % or more and 75 vol % or less with respect to the total volume of the conductive resin.

The metal contained in the first conductive resin layer and the second conductive resin layer may have any shape without particular limitation. The conductive filler may have a spherical shape, a flat shape, or the like.

The metal contained in the first conductive resin layer and the second conductive resin layer may have any average particle diameter without particular limitation. The conductive filler may have an average particle diameter of, for example, about 0.3 µm or greater and 10 µm or less.

The metal contained in the first conductive resin layer and the second conductive resin layer is mainly responsible for the electrical conductivity of the conductive resin layers. Specifically, the conductive filler particles in contact with each other form conduction paths in the conductive resin layer.

The metal contained in the first conductive resin layer and the second conductive resin layer may have a spherical shape, a flat shape, or the like, but it is preferable to use a mixture of a spherical metal powder and a flat metal powder.

The conductive resin layers may be formed directly on the multilayer body without forming the baked layers.

### (In the Case of Thin Film Layer)

In the case where the base electrode layer 32 is constituted by a thin film layer, the thin film layer is formed by a thin film forming method such as sputtering, vapor deposition, or the like, is constituted by deposited metal particles, and has a thickness of 10 µm or less.

The plating layer includes a lower plating layer 34 formed on a surface of the base electrode layer 32 and an upper plating layer 36 formed on a surface of the lower plating layer 34.

The lower plating layer 34 includes a first lower plating layer 34a and a second lower plating layer 34b.

The first lower plating layer 34a is disposed so as to cover a surface of a first base electrode layer 32a. The second lower plating layer 34b is disposed so as to cover a surface of a second base electrode layer 32b.

The upper plating layer 36 includes a first upper plating layer 36a and a second upper plating layer 36b.

The first upper plating layer 36a is disposed so as to cover a surface of the first lower plating layer 34a. The second upper plating layer 36b is disposed so as to cover a surface of the second lower plating layer 34b.

Each plating layer includes, for example, at least one selected from Cu, Ni, Ag, Pd, an Ag-Pd alloy, Au, or the like.

In the case where the plating layer is composed of a plurality of layers including the lower plating layer 34 and the upper plating layer 36, the plating layer preferably has a two-layer structure including a Ni plating layer and a Sn plating layer. The Ni plating layer can prevent the base electrode layer 32 from being eroded by solder when the multilayer ceramic capacitor 10 is mounted. The Sn plating layer can improve solder wettability when the multilayer ceramic capacitor 10 is mounted, thereby facilitating the mounting of the multilayer ceramic capacitor 10 on a mounting board. As described above, forming the plating layer composed of a plurality of layers including the lower plating layer 34 and the upper plating layer 36 makes it possible to efficiently improve the reliability and mountability of the multilayer ceramic capacitor 10.

Each of the Ni plating layer and the Sn plating layer constituting the plating layer preferably has a thickness of 1 µm or greater and 15 µm or less.

The dimension in the length direction z of the multilayer ceramic capacitor 10 including the multilayer body 12, the first external electrode 30a, and the second external electrode 30b is defined as the dimension L, the dimension in the height direction x of the multilayer ceramic capacitor 10 including the multilayer body 12, the first external electrode 30a, and the second external electrode 30b is defined as the dimension T, and the dimension in the width direction y of the multilayer ceramic capacitor 10 including the multilayer body 12, the first external electrode 30a, and the second external electrode 30b is defined as the dimension W. The dimensions of the multilayer ceramic capacitor 10 can be measured using a microscope.

The dimension L of the multilayer ceramic capacitor 10 in the length direction z is preferably 0.20 mm or greater and 5.70 mm or less.

The dimension T of the multilayer ceramic capacitor 10 in the height direction x is preferably 0.05 mm or greater and 2.50 mm or less.

The dimension W of the multilayer ceramic capacitor 10 in the width direction y is preferably 0.10 mm or greater and 5.00 mm or less.

In a case where the dielectric layers 14 contain pores, a crack forms from the pore as a starting point when a voltage is applied to the multilayer ceramic capacitor 10. Here, a plurality of pores present in the dielectric layer 14 allow the crack to propagate therethrough so that the crack extends from the dielectric layer 14 to the internal electrode layer 16. The formation of the crack in the internal electrode layer 16 causes insulation degradation. In addition, at the interfaces between the dielectric layers 14 having different pore area occupancy percentages (porosities), a crack is preferentially formed when a voltage is applied.

In the multilayer ceramic capacitor 10 illustrated in FIG. 1, since each dielectric layer 14 includes a plurality of pore-containing dielectric layers having different pore area occupancy percentages (porosities), a crack can be intentionally and preferentially formed at the interface between the plurality of pore-containing dielectric layers having different pore area occupancy percentages (porosities), and the crack is confined in the dielectric layer 14 and prevented from reaching the internal electrode layer 16, whereby the likelihood of a fatal defect that may cause dielectric breakdown can be reduced.

In the multilayer ceramic capacitor 10 illustrated in FIG. 1, it is preferable that each dielectric layer 14 constituted by the plurality of pore-containing dielectric layers includes the first pore-containing dielectric layer 14a, the second pore-containing dielectric layer 14b, and the third pore-containing dielectric layer 14c, as illustrated in FIG. 5. In this configuration, it is preferable that the first pore-containing dielectric layer 14a and the second pore-containing dielectric layer 14b have the same pore area occupancy percentage (porosity) that is different from the pore area occupancy percentage (porosity) of the third pore-containing dielectric layer 14c. The third pore-containing dielectric layer 14c is sandwiched between the first pore-containing dielectric layer 14a and the second pore-containing dielectric layer 14b in the height direction x.

In this configuration, the presence of the first pore-containing dielectric layer 14a and the second pore-containing dielectric layer 14b having a relatively lower pore area occupancy percentage (porosity) and having high insulating performance as a dielectric ensures the high-temperature load reliability of the multilayer ceramic capacitor 10, while the presence of the third pore-containing dielectric layer 14c allows a crack to be preferentially formed at the interfaces 14I between the pore-containing dielectric layers having different pore area occupancy percentage (porosities) and constituting the dielectric layer 14. Thus, the crack is prevented from reaching the internal electrode layers 16, whereby the likelihood of a fatal defect that may cause dielectric breakdown can be reduced.

### 2. Method of Manufacturing Multilayer Ceramic Capacitor

Next, a method of manufacturing the multilayer ceramic capacitor will be described.

First, dielectric layer-forming ceramic green sheets and an internal electrode layer-forming conductive paste are prepared. The dielectric layer-forming ceramic green sheets and the internal electrode layer-forming conductive paste include a binder and a solvent. The binder and the solvent may be known materials.

### (Step of Forming Pore-Containing Dielectric Layers)

To prepare the dielectric layer-forming ceramic green sheets, slurries containing dielectric materials having different compositions, a binder, and polymers are applied to carrier films, thereby providing a plurality of ceramic green sheets. Some of the plurality of ceramic green sheets are bonded together individually, whereby the dielectric layer-forming ceramic green sheets are prepared. The plurality of ceramic green sheets respectively form the first pore-containing dielectric layer, the second pore-containing dielectric layer, and the third pore-containing dielectric layer after being subjected to firing. The dielectric layer-forming ceramic green sheets, each of which is constituted by the plurality of ceramic green sheets bonded together, form the dielectric layers containing pores, after being subjected to firing. Each dielectric layer is made to have a varying porosity, in the following manner. At the time of preparing the dielectric layer-forming ceramic green sheets, the slurries each containing a dielectric material, a binder, and a polymer are prepared by using dielectric materials having different compositions and changing a ratio between each dielectric material and the binder.

The internal electrode layer-forming conductive paste is printed in a predetermined pattern on the dielectric layer-forming ceramic green sheets by, for example, screen printing, gravure printing, or the like. In this manner, the ceramic green sheets having the printed pattern of the first internal electrode layer thereon and the ceramic green sheets having the printed pattern of the second internal electrode layer thereon are prepared.

### (Step of Producing Multilayer Sheet)

Subsequently, a predetermined number of outer layer portion-forming ceramic green sheets that are devoid of the printed pattern of the internal electrode layer are laminated, whereby a portion to form the second main surface-side outer layer portion adjacent to the second main surface is formed. The ceramic green sheets having the printed pattern of the first internal electrode layer thereon and the ceramic green sheets having the printed pattern of the second internal electrode layer thereon are sequentially laminated over the portion to form the second main surface-side outer layer portion so that the structure of the present invention is obtained, whereby the portion to form the inner layer portion is formed. A predetermined number of outer layer portion-forming ceramic green sheets that are devoid of the printed pattern of the internal electrode layer are laminated over the portion to form the inner layer portion, whereby a portion to form the first main surface-side outer layer portion adjacent to the first main surface is formed. In this way, a multilayer sheet is produced.

### (Step of Producing Multilayer Block)

Next, the multilayer sheet is pressed in the lamination direction by means of isostatic pressing or the like to produce a multilayer block.

### (Step of Producing Multilayer Chips)

The multilayer block is cut into a predetermined size, thereby producing multilayer chips. In this step, the corners and ridges of the multilayer chips may be rounded by barrel polishing or the like.

### (Step of Producing Multilayer Body)

Next, the multilayer chips are fired to produce multilayer bodies. The firing temperature is preferably 900°C or higher and 1400°C or lower, although it depends on the temperatures of the dielectric layers and the internal electrode layers.

Next, a base electrode layer-forming conductive paste containing a metal component and a glass component is prepared.

### (Step of Forming External Electrodes)

The base electrode layer-forming conductive paste is applied to both end surfaces of each multilayer body, thereby forming the base electrode layers. The application of the conductive paste to both end surfaces of the multilayer body is performed by, for example, dipping, screen printing, or the like. The temperature of the baking in this step is preferably 700°C or higher and 900°C or lower.

Next, plating is performed on the surfaces of the base electrode layers to form plating layers, as needed. In the present embodiment, two plating layers are formed over the surface of each base electrode layer. Specifically, a Ni plating layer and a Sn plating layer are formed over each base electrode layer. The Ni plating layer and the Sn plating layer are sequentially formed by barrel plating, for example.

In the manner described above, the multilayer ceramic capacitor 10 according to the present embodiment is manufactured.

According to the manufacturing method of the present invention, a multilayer ceramic capacitor can be manufactured in which even if a crack is produced due to application of a voltage, a temperature load, or a physical impact, the crack is confined in the vicinity of the interface between the dielectric layers having different porosities and is prevented from reaching the internal electrode layers, and which is capable of reducing the likelihood of a fatal defect that may cause dielectric breakdown and reducing the cracking percentage.

### 3. Experimental Examples

Next, in order to confirm the effects exerted by the above-described multilayer ceramic capacitor according to the present invention, multilayer ceramic capacitors as experimental samples were prepared by the above-described manufacturing method, and were subjected to an experiment for measuring a cracking percentage.

### (1) Specifications of Experimental Samples

First, samples of multilayer ceramic capacitors of Examples 1 to 9 and a Comparative Example having the following specifications were prepared by the above-described manufacturing method. In order for the samples of the Examples and Comparative Example to have characteristics of the present invention, a plurality of ceramic green sheets for constituting the multilayer body were prepared so that the laminated sheets would have a desired total thickness, and the plurality of sheets were laminated by the above-described manufacturing method, for example.

### (Specification of Multilayer Ceramic Capacitor)

- Dimensions (design values) of the multilayer ceramic capacitor: L × W × T = 3.2 mm ×1.6 mm × 1.6 mm
- Ceramic material as the main component of the dielectric layers: BaTiO₃
- Capacitance: 10 µF
- Rated voltage: 25 V
- Material for Internal electrode Layers: Ni
- Material for External Electrodes: Cu
- Thickness of a central portion of the external electrode in the height direction, on each of the first end surface and the second end surface: about 90 µm
- Plating layer

Two-layer structure including a Ni plating layer and a Sn plating layer
Thickness of the Ni plating layer: about 4 µm
Thickness of the Sn plating layer: about 4 µm

### (2) Method of Measuring Cracking Percentage

First, in a step of measuring (screening) the multilayer ceramic capacitors, chips having an insulation resistance of 1 kΩ or less at room temperature were regarded as defective chips. The defective chips were observed with a stereomicroscope, and those having a crack thereon and those having an internal crack in the dielectric layer in a cross section resulting from polishing the chip from an LT surface were determined as cracked chips. A percentage of the numbers of the cracked chips with respect to the total number of measured chips (50,000) was defined as the cracking percentage. The cracking percentages were evaluated based on the following criteria: 0.1% or more was evaluated as "fail" (indicated by cross symbol "x"), 0.02% or more and less than 0.1% was evaluated as "fair" (indicated by triangle symbol "Δ"), 0.005% or more and less than 0.02% was evaluated as "good" (indicated by circle symbol "o"), and 0.005% or less was evaluated as excellent (indicated by bullseye symbol "⊙").

### (3) Results

Table 1 shows the cracking percentages of the dielectric layers in the multilayer bodies of Examples 1 to 9 and Comparative Example.

**[Table 1]**

| | Porosity of First Pore-Containing Dielectric Layer (%) | Porosity of Second Pore-Containing Dielectric Layer (%) | Porosity of Third Pore-Containing Dielectric Layer (%) | Cracking Percentage (%) | Evaluation |
|---|---|---|---|---|---|
| Example 1 | 1 | 5 | 3 | 0.06 | △ |
| Example 2 | 1 | 3 | 5 | 0.03 | △ |
| Example 3 | 1 | 1 | 3 | 0.01 | ○ |
| Example 4 | 0.07 | 0.07 | 0.1 | 0 | ⊚ |
| Example 5 | 0.01 | 0.01 | 0.1 | 0 | ⊚ |
| Example 6 | 0.05 | 0.05 | 0.1 | 0 | ⊚ |
| Example 7 | 0.05 | 0.05 | 1 | 0 | ⊚ |
| Example 8 | 0.05 | 0.05 | 3 | 0 | ⊚ |
| Example 9 | 0.05 | 0.05 | 5.4 | 0 | ⊚ |
| Comparative Example | 10 | 10 | 10 | 0.4 | × |

As shown in Table 1, the cracking percentages of the samples of Examples 1 to 9, in which each dielectric layer included a plurality of pore-containing dielectric layers having different porosities, were less than 0.1%, which is a satisfactory result.

In addition, the cracking percentages of the samples of Examples 4 to 9, in which the first and second pore-containing dielectric layers had a porosity of less than 0.1% and the third dielectric layer had a porosity of 0.1% or greater and less than 5.5%, were 0%, which is a further satisfactory result.

In contrast, the cracking percentage of the sample of the Comparative Example, in which the first, second, and third pore-containing dielectric layers all had an equal porosity of 10%, was 0.4%.

The above results suggest that the present invention is capable of preventing a crack from reaching the internal electrode layer and reducing the likelihood of a fatal defect that may cause dielectric breakdown, by virtue of the configuration in which the dielectric layers forming the multilayer body contain pores, the pores are unevenly distributed in each dielectric layer, and each dielectric layer includes a plurality of pore-containing dielectric layers having different pore area occupancy percentages (porosities) in a cross section of the dielectric layer.

It should be noted that the present invention is not limited to the embodiments disclosed in the above description.

In other words, various modifications can be made to the above-described embodiments in terms of the mechanism, the shape, the material, the quantity, the position, the arrangement, and the like without departing from the technical idea and the object of the present invention, and these modifications are encompassed in the scope of the present invention.
<1> A multilayer ceramic capacitor includes:
   a multilayer body including a plurality of dielectric layers that are laminated, and having a first main surface and a second main surface opposed to each other in a height direction that is a lamination direction of the plurality of dielectric layers, a first side surface and a second side surface opposed to each other in a width direction orthogonal to the height direction, and a first end surface and a second end surface opposed to each other in a length direction orthogonal to the height direction and the width direction;
   a first internal electrode layer disposed on the plurality of dielectric layers and exposed on the first end surface;
   a second internal electrode layer disposed on the plurality of dielectric layers and exposed on the second end surface;
   a first external electrode disposed on the first end surface; and
   a second external electrode disposed on the second end surface. In the multilayer ceramic capacitor,
   the multilayer body has an inner layer portion in which a plurality of the internal electrode layers face each other, the dielectric layers contain pores,
   the pores are unevenly distributed in each of the dielectric layers, and
   each of the dielectric layers includes a plurality of pore-containing dielectric layers having different pore area occupancy percentages (porosities) in a cross section of the dielectric layer.
<2> In the multilayer ceramic capacitor according to <1>,
   the plurality of pore-containing dielectric layers include a first pore-containing dielectric layer, a second pore-containing dielectric layer, and a third pore-containing dielectric layer,
   the first pore-containing dielectric layer and the second pore-containing dielectric layer have the same pore area occupancy percentage (porosity) that is different from the pore area occupancy percentage (porosity) of the third pore-containing dielectric layer, and
   the third pore-containing dielectric layer is sandwiched between the first pore-containing dielectric layer and the second pore-containing dielectric layer in the height direction.
<3> In the multilayer ceramic capacitor according to <2>,
   the porosity of the first pore-containing dielectric layer and the second pore-containing dielectric layer is less than 0.1%, and
   the porosity of the third pore-containing dielectric layer is 0.1% or greater and less than 5.5%.
<4> A method of manufacturing the multilayer ceramic capacitor according to any one of <1> to <3> includes:
   forming the plurality of pore-containing dielectric layers by bonding some of a plurality of ceramic green sheets together individually, the plurality of ceramic green sheets having been prepared by applying slurries containing dielectric materials having different compositions, a binder, and
   polymers to carrier films;
   applying an internal electrode-forming conductive paste to the plurality of ceramic green sheets;
   producing a multilayer sheet by laminating two or more of the ceramic green sheets and two or more of the ceramic green sheets having the internal electrode-forming conductive paste applied thereon;
   producing a multilayer block by pressing the multilayer sheet in a direction in which the ceramic green sheets are laminated;
   producing a multilayer chip by cutting the multilayer block; producing the multilayer body by firing the multilayer chip; and
   forming the first external electrode and the second external electrode by applying an external electrode-forming conductive paste to the multilayer body, and by baking the external electrode-forming conductive paste.

### EXPLANATION OF REFERENCE NUMERALS

10: Multilayer ceramic capacitor
12: Multilayer body
12a: First main surface
12b: Second main surface
12c: First side surface
12d: Second side surface
12e: First end surface
12f: Second end surface
14: Dielectric layer
14a: First pore-containing dielectric layer
14b: Second pore-containing dielectric layer
14c: Third pore-containing dielectric layer
14I: Interface
16: Internal electrode layer
16a: First internal electrode layer
16b: Second internal electrode layer
16c: Floating internal electrode layer
18: Inner layer portion
20a: First main surface-side outer layer portion
20b: Second main surface-side outer layer portion
22a: First side surface-side outer layer portion
22b: Second side surface-side outer layer portion
24a: First end surface-side outer layer portion
24b: Second end surface-side outer layer portion
26a: First counter electrode portion
26b: Second counter electrode portion
26c: Counter electrode portion
28a: First lead-out electrode portion
28b: Second lead-out electrode portion
30: External electrode
30a: First external electrode
30b: Second external electrode
32: Base electrode layer
32a: First base electrode layer
32b: Second base electrode layer
34: Lower plating layer
34a: First lower plating layer
34b: Second lower plating layer
36: Upper plating layer
36a First upper plating layer
36b Second upper plating layer

## Claims

1. A multilayer ceramic capacitor comprising:
a multilayer body including a plurality of dielectric layers that are laminated, and having a first main surface and a second main surface opposed to each other in a height direction that is a lamination direction of the plurality of dielectric layers, a first side surface and a second side surface opposed to each other in a width direction orthogonal to the height direction, and a first end surface and a second end surface opposed to each other in a length direction orthogonal to the height direction and the width direction;
a first internal electrode layer disposed on the plurality of dielectric layers and exposed on the first end surface;
a second internal electrode layer disposed on the plurality of dielectric layers and exposed on the second end surface;
a first external electrode disposed on the first end surface; and
a second external electrode disposed on the second end surface, wherein
the multilayer body has an inner layer portion in which a plurality of the internal electrode layers face each other,
the dielectric layers contain pores,
the pores are unevenly distributed in each of the dielectric layers, and
each of the dielectric layers includes a plurality of pore-containing dielectric layers having different pore area occupancy percentages (porosities) in a cross section of the dielectric layer.

2. The multilayer ceramic capacitor according to claim 1, wherein
the plurality of pore-containing dielectric layers comprise a first pore-containing dielectric layer, a second pore-containing dielectric layer, and a third pore-containing dielectric layer,
the first pore-containing dielectric layer and the second pore-containing dielectric layer have the same pore area occupancy percentage (porosity) that is different from the pore area occupancy percentage (porosity) of the third pore-containing dielectric layer, and
the third pore-containing dielectric layer is sandwiched between the first pore-containing dielectric layer and the second pore-containing dielectric layer in the height direction.

3. The multilayer ceramic capacitor according to claim 2, wherein
the porosity of the first pore-containing dielectric layer and the second pore-containing dielectric layer is less than 0.1%, and
the porosity of the third pore-containing dielectric layer is 0.1% or greater and less than 5.5%.

4. A method of manufacturing the multilayer ceramic capacitor according to any one of claims 1 to 3, the method comprising:
forming the plurality of pore-containing dielectric layers by bonding some of a plurality of ceramic green sheets together individually, the plurality of ceramic green sheets having been prepared by applying slurries containing dielectric materials having different compositions, a binder, and polymers to carrier films;
applying an internal electrode-forming conductive paste to the plurality of ceramic green sheets;
producing a multilayer sheet by laminating two or more of the ceramic green sheets and two or more of the ceramic green sheets having the internal electrode-forming conductive paste applied thereon;
producing a multilayer block by pressing the multilayer sheet in a direction in which the ceramic green sheets are laminated;
producing a multilayer chip by cutting the multilayer block;
producing the multilayer body by firing the multilayer chip; and
forming the first external electrode and the second external electrode by applying an external electrode-forming conductive paste to the multilayer body, and by baking the external electrode-forming conductive paste.
